# FASCICULE DE BREVET EUROPEEN

(11) **EP 1 343 594 B1**
(45) Date de publication et mention de la délivrance du brevet: **04.03.2009**
(21) Numéro de dépôt: 01994894.2
(22) Date de dépôt: 18.12.2001
(51) Int. Cl.: B05B 12/00, G05B 19/418

(54) **PROCEDE DE CONTROLE D'UNE INSTALLATION DE REVETEMENT DE SURFACE**
VERFAHREN ZUR STEUERUNG EINER OBERFLÄCHENBESCHICHTUNGSANLAGE
METHOD FOR CONTROLLING A SURFACE COATING INSTALLATION

(30) Priorité: 19.12.2000 FR 0016608
(43) Date de publication de la demande: 17.09.2003
(73) Titulaire: EISENMANN Anlagenbau GmbH & Co. KG, 71032 Böblingen (DE)
(72) Inventeur: CEBOLA, Dominique, F-38500 COUBLEVIE (FR); CHARPIN, Lionel, F-38240 MEYLAN (FR)
(74) Mandataire: Ostertag, Ulrich
(86) Numéro de dépôt international: PCT/FR2001/004045
(87) Numéro de publication internationale: WO 2002/049772

(56) Documents cités:
- EP-A- 0 125 776
- US-A- 5 255 197
- US-A- 5 521 477
- US-A- 5 645 884
- US-A- 5 689 415
- SUH S-H ET AL: "PROTOTYPE INTEGRATED ROBOTIC PAINTING SYSTEM: SOFTWARE AND HARDWARE DEVELOPMENT" JOURNAL OF MANUFACTURING SYSTEMS, SOCIETY OF MANUFACTURING ENGINEERS, DEARBORN, MI, US, vol. 12, no. 6, 1993, pages 463-473, XP000448773 ISSN: 0278-6125
- PATENT ABSTRACTS OF JAPAN vol. 2000, no. 01, 31 janvier 2000 (2000-01-31) & JP 11 267991 A (NISSAN MOTOR CO LTD), 5 octobre 1999 (1999-10-05)

## Description

La présente invention concerne un procédé de contrôle d'une installation de revêtement de surface, notamment pour l'industrie automobile. Ce procédé s'applique, en particulier, au contrôle d'une installation automatique de peinture de carrosseries de véhicules automobiles, au moyen de machines équipées de pulvérisateurs de peinture.

Dans l'industrie automobile, une installation de traitement de surface, destinée par exemple à peindre des carrosseries portées et déplacées par un convoyeur, comporte par exemple un ensemble de six machines destinées au revêtement des parois latérales des carrosseries et une machine appelée aussi "machine de toit" destinée au revêtement des surfaces de ces carrosseries se trouvant sensiblement à l'horizontale. Chacune des six machines dites latérales est équipée d'un pulvérisateur, tandis que la machine de toit comporte trois pulvérisateurs distincts. Une telle installation fonctionne en synchronisation avec le convoyeur assurant l'avance des carrosseries à peindre. Elle comporte en outre une cabine munie d'une ventilation verticale et d'un système de récupération du produit de revêtement.

Le dispositif de commande et de contrôle d'une telle installation permet notamment :
- d'identifier le type d'une carrosserie entrant dans la zone de l'installation et le suivi de cette carrosserie jusqu'à sa sortie de la zone,
- d'assurer la cinématique des mouvements de chacune des machines et le contrôle des paramètres de pulvérisation du (ou des) pulvérisateur(s) qu'elle supporte ; la cinématique des mouvements et les paramètres de pulvérisation sont à chaque fois spécifiques à la carrosserie en cours de traitement.

De tels systèmes de contrôle commande sont décrits dans la demande de brevet d'invention français N° 00.04074 déposée le 30 Mars 2000 au nom de la demanderesse, et publiée sous le N° 2806934.

L'un des organes "intelligents" du système de commande et de contrôle dispose en mémoire, pour chacun des types de carrosserie, d'une table appelée "fichier d'application" qui contient tous les ordres de positionnement de chacune des machines et autres éléments ainsi que le réglage de chacun des pulvérisateurs en fonction de l'avance de la carrosserie sur le convoyeur. A intervalles réguliers, chaque intervalle correspondant par exemple au déplacement de la carrosserie sur le convoyeur selon une distance prédéterminée, les machines et pulvérisateurs nécessitent de nouveaux réglages puisque la carrosserie a progressé au sein de l'installation.

Les fichiers d'application pour chacun des types de carrosserie sont programmés sur un ordinateur servant à la programmation. L'établissement de ces fichiers consiste, pour une carrosserie ayant une forme donnée, à entrer pour différentes positions de la carrosserie dans l'installation les différents ordres correspondant par exemple aux positions des divers axes de chaque machine, au débit de produit de traitement pour chacun des pulvérisateurs, à la tension électrique appliquée (cas d'un pulvérisateur à effet électrostatique), etc.

Le temps nécessaire pour mettre au point les fichiers d'application pour chacune des carrosseries est très important. Il faut en effet enregistrer un grand nombre de points afin que l'enveloppe cinématique de chacune des machines soit proche de la forme de la carrosserie. Ceci est vrai pour chacune des carrosseries et on compte généralement une moyenne de vingt carrosseries pour chaque usine de production. De ce fait, on limite le nombre de points des fichiers d'application à environ une centaine, selon la complexité de la forme extérieure de la carrosserie. De plus, compte tenu des différents types de peinture, des ajustements des réglages des pulvérisateurs sont nécessaires, selon les teintes. De ce fait, le nombre des fichiers d'application est encore multiplié par le nombre des teintes, si bien que l'on obtient au total des tables qui comportent un nombre de points de programmation de l'ordre d'une dizaine de milliers.

De plus, il est nécessaire de tester ces fichiers d'application en grandeur réelle, c'est-à-dire sur une carrosserie. Une telle phase d'essai et de réglage peut durer de quelques jours à plusieurs semaines. Elle est coûteuse en temps et aussi en frais d'exploitation, dans la mesure où elle consomme du produit de revêtement et de nettoyage et dans la mesure où elle salit l'installation et demande donc de l'entretien. En outre, il est fréquent dans les usines automobiles de remplacer de vieilles installations par de nouvelles durant la période estivale d'arrêt de production. On dispose alors de quatre semaines pendant lesquelles il faut démonter l'ancienne installation, modifier les infrastructures, assembler la nouvelle installation, procéder à la mise en service puis au test à vide et enfin au réglage d'application afin d'être prêt à démarrer en pleine production avec le minimum de rebuts. La phase d'essai et de réglage représente la partie la plus longue et la plus incertaine de la mise en route d'une nouvelle installation.

La phase d'essai représente également un coût d'exploitation important car il est nécessaire d'utiliser des carrosseries, de la peinture et du produit de nettoyage. Il est aussi nécessaire de faire fonctionner l'ensemble de l'installation : réseau de distribution des produits, réseau d'air comprimé, convoyeur, cabine, four. Il est également nécessaire de procéder au nettoyage des machines et de la cabine après chaque période d'essai.

La présente invention vise à éviter tous ces inconvénients, et elle a donc pour but de fournir un procédé permettant de réduire les coûts des phases d'essai et de mise au point des fichiers d'application, en diminuant le temps nécessaire à ces phases et/ou les coûts d'exploitation liés à ceux-ci, ce procédé permettant avantageusement aussi d'apporter plus facilement des modifications lorsqu'apparaît un nouveau type de carrosserie, ou plus généralement de pièce à traiter, ou lorsque des caractéristiques du produit pulvérisé changent.

A cet effet, l'invention a essentiellement pour objet un procédé de contrôle d'une installation de revêtement de surface selon la revendication 1.

Dans le cas d'une installation comprenant une pluralité de machines, le procédé peut encore comprendre une étape d'affectation automatique des tâche aux différentes machines de l'installation, avec décomposition de la surface à traiter, telle que carrosserie, en zones traitées respectivement par ces différentes machines.

Avantageusement, le procédé comprend encore une étape de génération automatique des réglages des équipements, tels que pulvérisateur, en chaque point de la trajectoire de la machine correspondante, notamment en fonction de l'épaisseur souhaitée de produit de traitement, tel que peinture, à projeter.

En relation avec ce qui précède, le procédé de l'invention peut comprendre aussi une étape de simulation des épaisseurs obtenues de produits de traitement, tels que peinture, complétée avantageusement par une étape de visualisation des épaisseurs de produit de traitement obtenues en fin de simulation.

Ainsi, dans l'ensemble, le procédé objet de l'invention permet, en quelque sorte , une écriture automatique des fichiers d'application, évitant les essais longs et coûteux, par une simulation des mouvements de chaque machine et du fonctionnement de ses équipements tels que pulvérisateur, tout en permettant la vérification et la validation des résultats obtenus, éventuellement après correction manuelle ou automatique des épaisseur de produit de traitement, par exemple en certains points particuliers, qui posent un problème.

Dans le détail, le procédé de l'invention, utilisé (à titre d'exemple) pour la peinture de carrosseries, au moyen de machines équipées de pulvérisateurs, consiste en premier lieu à caractériser les jets de peinture pour chacun des types de pulvérisateur et pour chacun des types de peinture. Ces essais sont faits en laboratoire sur des plaques, à différentes valeurs de débit, à différentes valeurs d'air de conformation, à différentes valeurs de haute tension électrique, à différentes distances et à la vitesse nominale du convoyeur, et permettent de mesurer les impacts des jets de peinture (forme, notamment largeur et hauteur) et les épaisseurs de peinture obtenues. Ces données sont alors mémorisées dans une base de données, avec les caractéristiques de la peinture (viscosité, pourcentage d'extrait sec,..).

En second lieu, il est nécessaire de caractériser la ou les machines d'application. Ainsi, chaque axe cinématique (accélération, vitesse, course, ...) est entré dans un ordinateur sous la forme d'une équation. Les axes sont ensuite « liés » par exemple en interpolation circulaire. Ceci permet à un opérateur de ne pas programmer chacun des axes mais juste de donner la position à laquelle doit se trouver la buse du pulvérisateur. Le calculateur déterminera alors, à partir de la position précédente, les consignes à appliquer sur les variateurs de vitesse correspondant à chaque axe tout en respectant les limites cinématiques des machines.

Ensuite la carrosserie est introduite dans le calculateur sous la forme d'un fichier numérique "3D" par exemple au moyen d'un cédérom directement transmis par le constructeur final. A partir de ce fichier, le procédé consiste à créer l'enveloppe cinématique de l'ensemble des machines au moyen d'un certain nombre de règles, telles que les suivantes :
- Chaque "plan" constitué par une paire de machines, sensiblement situées en vis-à-vis de part et d'autre de la cabine et travaillant symétriquement, est affecté à une zone à peindre du véhicule ; par exemple un plan se charge des zones horizontales du capot avant, du toit et du coffre, un autre plan s'occupe du bas de caisse allant environ jusqu'au passage de roue et le troisième plan se charge de la zone intermédiaire.
- Les zones représentant de grandes surfaces sont peintes en décrivant des oscillations permettant de simuler des bandes de peinture ayant la largeur d'un jet ; afin de bien revêtir toutes ces zones, les bandes doivent se recouvrir et ceci de la même manière sur toute la zone afin de conserver une épaisseur constante. Ainsi, la période de l'oscillation multipliée par la vitesse du convoyeur doit être de l'ordre d'une demi-largeur d'impact, voire d'un tiers.
- Afin d'avoir la bonne vitesse de déplacement de la machine lors de l'ouverture du jet de peinture, il est nécessaire de prévoir des surcourses pendant lesquelles la machine ralentira ou accélérera.
- Le taux de charge de chacune des machines doit être le plus proche possible d'une machine à l'autre ; il n'est pas question d'avoir par exemple un "plan" travaillant à 80% du temps et un autre à 20%.
- Les déplacements décrits sans pulvériser de la peinture sont minimisés et un ratio de la surface parcourue par chaque machine par rapport à sa surface peinte est donné en fin de simulation.

L'affectation des tâches aux différents "plans" et la décomposition d'une carrosserie en zones peuvent être faites manuellement ou automatiquement.

A la fin de cette étape, le procédé permet de simuler totalement les mouvements de chacune des machines autour de la carrosserie et de visualiser sur un écran cette cinématique. Il est possible de générer éventuellement un fichier d'erreur dans lequel les zones ou positions posant un problème sont données (survitesse d'un axe, dépassement d'une limite d'un axe, point inaccessible). Des corrections manuelles peuvent être apportées à la cinématique, par exemple pour corriger un point.

Il reste alors, à partir de cette trajectoire et des épaisseurs de peinture souhaitées pour chacune des zones de la carrosserie, à déterminer en tout point les réglages de chacun des paramètres du pulvérisateur. Cette opération est réalisée automatiquement, à partir de la base de données construite, grâce aux essais réalisés en laboratoire sur des plaques et qui permettent en tout point de la trajectoire d'affecter un jet de peinture et donc les réglages de chacun des pulvérisateurs pour obtenir l'épaisseur de peinture voulue. Un rendement du dépôt d'application, c'est-à-dire le rapport entre la quantité de peinture réellement appliquée sur la carrosserie et la quantité de peinture pulvérisée, dépendant notamment du type de pulvérisateur utilisé (avec ou sans effet électrostatique), est aussi appliqué afin de s'approcher au mieux de la réalité. A la fin de cette étape, il est possible de visualiser sur un écran l'épaisseur théorique obtenue en tout point de la carrosserie et éventuellement les écarts par rapports à l'épaisseur désirée.

Ainsi le procédé permet de générer automatiquement des fichiers d'application pour chacune des carrosseries et pour chacune des teinte. Ces fichiers sont ensuite testés en vraie grandeur chez l'utilisateur filial, sur les carrosseries. Des relevés d'épaisseur de peinture sont effectués et aux zones de sur-épaisseur, et de sous-épaisseur, dues notamment à la topologie particulière des zones et aux conditions réelles de pulvérisation, des corrections manuelles ou automatiques permettant d'obtenir les bonnes épaisseurs de peinture peuvent être apportées aux fichiers d'application.

Les erreurs générées lors des phases de simulation cinématique ou peinture, et les corrections correspondantes, alimentent une base de données qui permettra, au moyen d'un système expert, de les corriger automatiquement en première simulation.

Le procédé objet de l'invention est illustré, dans le cadre d'une application particulière, par le dessin schématique annexé, dans lequel :
la figure 1 est une vue en plan par dessus d'une portion d'une installation de peinture de carrosseries, contrôlée à l'aide du procédé de la présente invention ;
la figure 2 est une vue en bout de l'installation de peinture de la ' figure 2 ;
la figure 3 est un organigramme montrant des étapes du procédé selon l'invention, appliqué à ce genre d'installation.

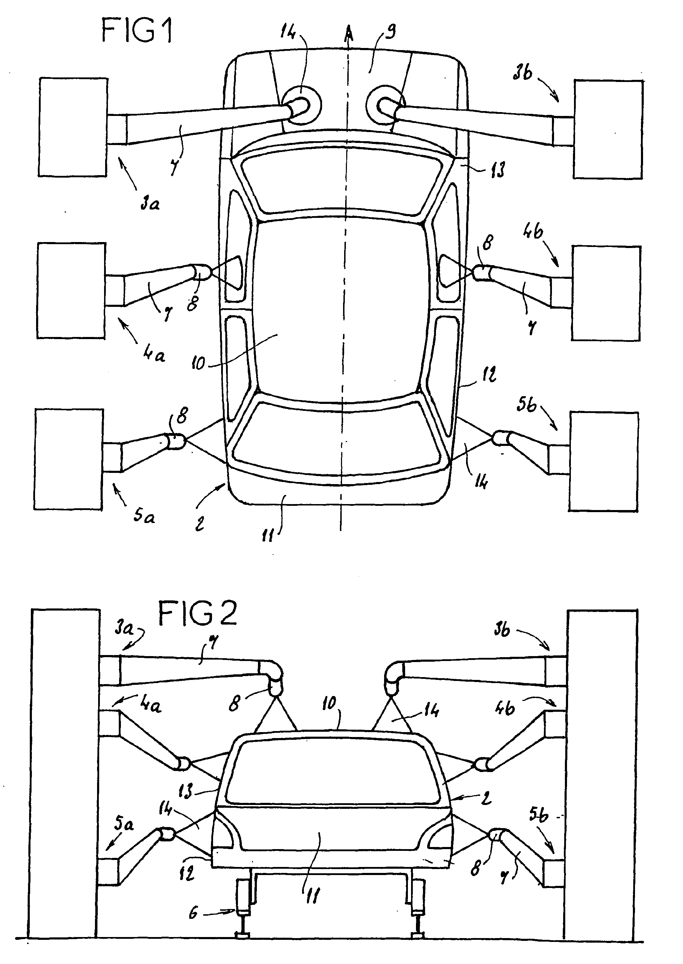

Comme l'illustrent les figures 1 et 2, le procédé objet de l'invention est notamment applicable au contrôle d'une installation destinée à peindre des carrosseries 2 de véhicules automobiles. L'installation est du type comprenant des machines latérales multi-axes 3a, 3b, 4a, 4b, 5a, 5b disposées de part et d'autre d'un convoyeur 6 assurant l'avance des carrosseries 2 à peindre, qui se succèdent avec un certain espacement. Le cas échéant, cette installation comprend aussi une machine dite "machine de toit" (non représentée) disposée au-dessus du convoyeur 6.

Les deux machines latérales 3a, 3b sont disposées en vis-à-vis. Il en est de même pour la deuxième paire de machines 4a, 4b, ainsi que pour la troisième paire de machines 5a, 5b.

Chacune de ces machines 3a, 3b, 4a, 4b, 5a, 5b comporte un bâti supportant un bras mobile robotisé 7, qui porte à son extrémité un pulvérisateur 8 en liaison avec un réservoir de peinture. Deux machines situées en vis-à-vis constituent ce que l'on appelle un "plan", et sont affectées à la peinture de zones définies d'une carrosserie 2. Par exemple :
- le plan constitué par la première paire de machines 3a, 3b assure la peinture du capot avant 9, du toit 10 et du coffre 11 de la carrosserie 2 ;
- le plan constitué par la troisième paire de machines 5a, 5b assure la peinture du bas de caisse 12 de la carrosserie 2 ;
- le plan constitué par la deuxième paire de machines 4a, 4b assure la peinture de la zone intermédiaire 13 de la carrosserie 2 (réalisant la jonction entre les zones "haute" et "basse" précédemment définies).

Le procédé, objet de l'invention, assure la préparation automatique du travail des différentes machines 3a, 3b, 4a, 4b, 5a, 5b, en fonction des carrosseries 2 concernées, des caractéristiques des axes cinématiques des machines 3a, 3b, 4a, 4b, 5a, 5b, et des caractéristiques des pulvérisateurs 8 donc de leurs jets de peinture 14. Ce procédé permet de générer et de valider les "fichiers d'application", avec tests et corrections, de manière à définir et contrôler, en tenant compte de l'épaisseur de peinture désirée :
- les trajectoires et vitesses des machines 3a, 3b, 4a, 4b, 5a, 5b ;
- les réglages des pulvérisateurs 8 respectifs de toutes ces machines ;
- le cas échéant, l'affectation des tâches (décomposition de la carrosserie 2 en zones) aux différents "plans" de machines, respectivement 3a, 3b ou 4a, 4b ou 5a, 5b.

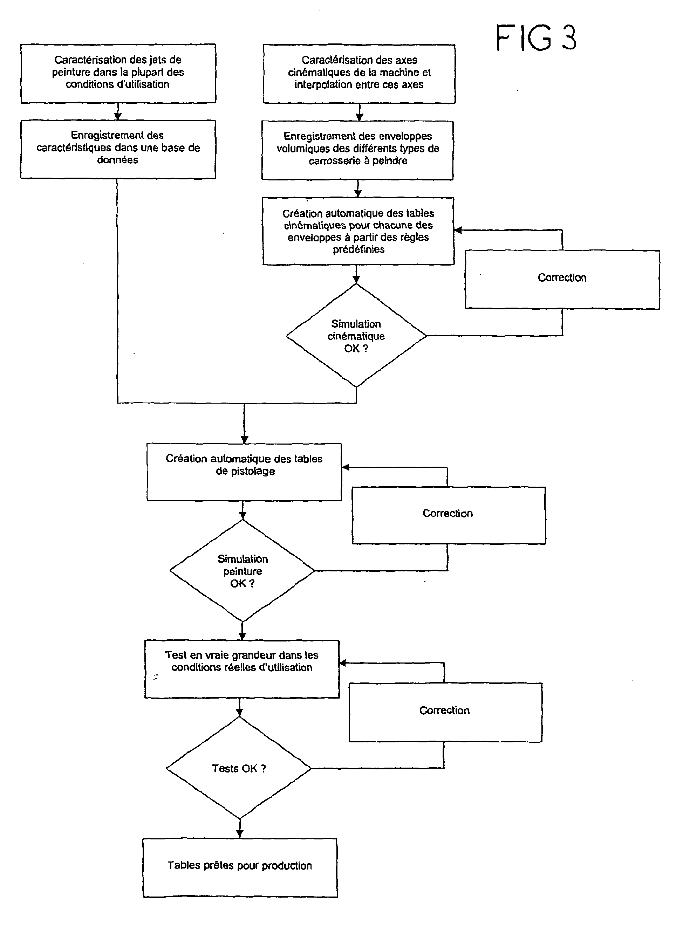

Les étapes du procédé sont illustrées par l'organigramme de la figure 3, se référant à l'application particulière de l'invention à la peinture de carrosseries, précédemment décrite en référence aux figures 1 et 2.

Le procédé, objet de l'invention, peut être appliqué à tout système de commande et de contrôle d'une installation automatique de revêtement de surface par pistolage ou technique analogue, quelles que soient les pièces à traiter, et quels que soient le nombre et les particularités des machines utilisées.

## Revendications

1. Procédé de contrôle d'une installation de revtement de surface comportant au moins une machine multi-axes (3,4,5), chaque axe étant équipé de moyens moteurs, la ou chaque machine étant munie d'équipements tels que par exemple un pulvérisateur (8) ainsi que de capteurs et actionneurs correspondants, le procédé consistant :
à caractériser les jets de produit de traitement, tel que peinture, pour chacun des types d'équipements tels que pulvérisateur et pour chacun des types de produit de traitement, tel que peinture, et à mémoriser ces éléments dans une base de données de pulvérisation,
à caractériser la ou les machines (3,4,5) d'application de produit de traitement, tel que peinture, et plus particulièrement les axes cinématiques de chaque machine, en liant ces axes entre eux,
à enregistrer les caractéristiques d'une pièce (2) telle que carrosserie à traiter en surface, et
à créer automatiquement, à partir de l'ensemble des éléments précédents, et de l'épaisseur de produit de traitement souhaitée en tout point de la pièce (2) à traiter, les trajectoires de chaque machine (3,4,5) d'application de produit de traitement, tel que peinture,
**caractérisé en ce que**
les erreurs générées lors des phases de simulation cinématique ou peinture, et les corrections correspondantes, alimentent une base de données qui permettra, au moyen d'un système expert, de les corriger automatiquement en première simulation.

2. Procédé selon la revendication 1, **caractérisé en ce que**, dans le cas d'une installation comprenant une pluralité de machines (3, 4, 5) d'application de produit de traitement, le procédé comprend encore une étape d'affectation automatique des tâches aux différentes machines (3, 4, 5) de l'installation, avec décomposition de la surface à traiter, telle que carrosserie (2), en zones (9 à 13) traitées respectivement par ces différentes machines.

3. Procédé selon la revendication 1 ou 2, **caractérisé en ce qu'**il comprend encore une étape de génération automatique des réglages des équipements, tel que pulvérisateur, en chaque point de la trajectoire de la machine (3, 4, 5) correspondante, notamment en fonction de l'épaisseur souhaitée de produit de traitement, tel que peinture, à projeter.

4. Procédé selon la revendication 3, **caractérisé en ce qu'**il comprend aussi une étape de simulation des épaisseurs obtenues de produit de traitement, tel que peinture.

5. Procédé selon la revendication 4, **caractérisé en ce que** ladite étape de simulation des épaisseurs est complétée par une étape de visualisation des épaisseurs de produit de traitement obtenues en fin de simulation.

6. Procédé selon la revendication 5, **caractérisé en ce qu'**il comprend encore une étape de correction manuelle des épaisseur de produit de traitement, notamment en des points particuliers.

7. Procédé selon la revendication 5, **caractérisé en ce qu'**il comprend encore une étape de correction automatique des épaisseurs, à partir des relevés d'épaisseur de produit de traitement, notamment en des points particuliers.

8. Procédé selon l'une quelconque des revendications 1 à 7, **caractérisé en ce qu'**il est appliqué au contrôle d'une installation destinée à peindre des carrosseries (2) de véhicules automobiles, l'installation étant du type comprenant des machines multi-axes (3, 4, 5) disposées de part et d'autre d'un convoyeur (6) assurant l'avance des carrosseries (2) ) à peindre, et le cas échéant une machine disposée au-dessus de ce convoyeur, chaque machine (3, 4, 5) étant équipée d'au moins un pulvérisateur (8), le procédé assurant, pour une telle installation, la génération automatique des "fichiers d'apptication".

## Claims

1. A method of controlling a surface coating installation comprising at least one multi-axis machine (3, 4, 5), each axis being equipped with driving means, the or each machine being provided with equipment such as for example a sprayer (8) together with corresponding sensors and actuators, the method consisting in
characterising the jets of treatment product, such as paint, for each of the types of equipment such as the sprayer and for each of the types of treatment product, such as paint, and storing these elements in a spraying database,
characterising the machine(s) (3, 4, 5) for applying treatment product, such as paint, and more particularly the kinematic axes of each machine, linking these axes together,
recording the characteristics of an item (2) such as a vehicle body to be surface-treated, and
automatically creating, from all the preceding elements and the desired treatment product thickness at all points of the item (2) to be treated, the trajectories of each machine (3, 4, 5) for applying treatment product, such as paint
**characterised in that**
the errors generated during the kinematic or painting simulation phases, and the corresponding corrections, supply a database which will allow, by means of a specialist system, automatic correction thereof during the first simulation.

2. A method according to claim 1, **characterised in that**, in the case of an installation comprising a plurality of machines (3, 4, 5) for applying treatment product, the method additionally comprises a stage of automatically assigning tasks to the various machines (3, 4, 5) of the installation, with breakdown of the surface to be treated, such as a vehicle body (2), into zones (9 to 13) treated respectively by these various machines.

3. A method according to claim 1 or claim 2, **characterised in that** it additionally comprises a stage of automatically bringing about adjustment of the equipment, such as the sprayer, at each point of the trajectory of the corresponding machine (3, 4, 5), in particular as a function of the desired thickness of treatment product, such as paint, to be sprayed.

4. A method according to claim 3, **characterised in that** it also comprises a stage of simulating the thicknesses obtained of the treatment product, such as paint.

5. A method according to claim 4, **characterised in that** said stage of simulating thicknesses is supplemented by a stage of displaying the thicknesses of treatment product obtained at the end of simulation.

6. A method according to claim 5, **characterised in that** it additionally comprises a stage of manually correcting the thickness of treatment product, in particular at specific points.

7. A method according to claim 5, **characterised in that** it additionally comprises a stage of automatically correcting the thicknesses on the basis of treatment product thickness readings, in particular at specific points.

8. A method according to any one of claims 1 to 7,
**characterised in that** it is applied to control of an installation intended for painting the bodies (2) of automotive vehicles, the installation being of the type comprising multi-axis machines (3, 4, 5) disposed either side of a conveyor (6) ensuring feed of the bodies (2) to be painted and, if need be, a machine disposed above said conveyor, each machine (3, 4, 5) being equipped with at least one sprayer (8), the method ensuring, for such an installation, automatic generation of "application files".

## Patentansprüche

1. Verfahren zum Steuern einer Oberflächenbeschichtungsanlage, die mindestens eine Mehrachsmaschine (3, 4, 5) aufweist, wobei jede Achse mit Antriebsmitteln versehen ist und wobei die oder jede Maschine mit Einrichtungen, wie beispielsweise einem Zerstäuber (8), sowie mit entsprechenden Aufnehmern und Aktoren versehen ist, wobei das Verfahren umfasst:
Kennzeichnen von Strahlen eines Behandlungsprodukts, wie Lack, für jeden der Einrichtungstypen, wie Zerstäuber, und für jede der Sehandlungsprodukt-Typen, wie Lack, und Speichern dieser Elemente in einer Zerstäubungsdatenbank;
Kennzeichnen der Maschine oder der Maschinen (3, 4, 5) zum Auftragen des Behandlungsprodukts, wie Lack, und insbesondere der kinematischen Achsen jeder Maschine, indem diese Achsen miteinander in Verbindung gebracht werden;
Erfassen der charakteristischen Merkmale eines Stücks (2) wie z.B. einer Karosserie, die an der Oberfläche zu behandeln ist;
automatisches Generieren der Trajektorien jeder Maschine (3, 4, 5), die zum Auftragen eines Behandlungsprodukts, wie Lack, dient, ausgehend von dem Ensemble der vorgenannten Elemente und der gewünschten Dicke des Behandlungsprodukts an jedem Punkt des zu behandelnden Stücks (2),
**dadurch gekennzeichnet, dass**
die während der Phasen der Kinematik- oder Lackiersimulation entstandenen Fehler und die entsprechenden Korrekturen eine Datenbank speisen, die es erlauben wird, diese automatisch mit Hilfe eines Expertensystems während der ersten Simulation zu korrigieren.

2. Verfahren nach Anspruch 1, **dadurch gekennzeichnet,**
**dass** im Falle einer Anlage, die eine Mehrzahl von Maschinen (3, 4, 5) zum Auftragen eines Behandlungprodukts aufweist, das Verfahren ferner einen Schritt aufweist, bei dem Aufgaben automatisch den verschiedenen Maschinen (3, 4, 5) der Anlage zugewiesen werden, was unter Aufteilung der zu behandelnden Oberfläche, wie einer Karosserie (2), in Zonen (9 bis 13) erfolgt, die entsprechend von diesen Maschinen behandelt werden.

3. Verfahren nach Anspruch 1 oder 2, **dadurch gekennzeichnet, dass** es ferner einen Schritt zum automatischen Erzeugen von Justierungen der Einrichtungen, wie einem Zerstäuber, an jedem Punkt der Trajektorie der entsprechenden Maschine (3, 4, 5), insbesondere in Abhängigkeit der gewünschten Dicke des aufzuspritzenden Behandlungsprodukts, wie Lack, aufweist.

4. Verfahren nach Anspruch 3, **dadurch gekennzeichnet, dass** es auch einen Schritt zur Simulation der erhaltenen Dicken des Behandlungsprodukts, wie Lack, aufweist.

5. Verfahren nach Anspruch 4, **dadurch gekennzeichnet, dass** der genannte Schritt zur Simulation der Dicken am Ende der Simulation durch einen Schritt zur Visualisierung der erhaltenen Dicken des Hehandlungsproduktes komplettiert wird.

6. Verfahren nach Anspruch 5, **dadurch gekennzeichnet, dass** es ferner einen Schritt zur manuellen Korrektur der Dicke des Behandlungsprodukts, insbesondere an speziellen Punkten, aufweist.

7. Verfahren nach Anspruch 5, **dadurch gekennzeichnet, dass** es ferner einen Schritt zur automatischen Korrektur der Dicken ausgehend von Aufzeichnungen der Dicke des Behandlungsprodukts, insbesondere an speziellen Punkten, aufweist.

8. Verfahren nach einem der Ansprüche 1 bis 7, **dadurch gekennzeichnet, dass** es auf das Steuern einer Anlage, die zur Lackierung von Karosserien (2) von Automobilfahrzeugen dient, angewandt wird, wobei die Anlage des Typs ist, der Mehrachsenmaschinen (3, 4, 5) aufweist, welche beiderseits eines Förderers (6) angeordnet sind, der für das Vorwärtsbewegen der zu lackierenden Karosserien (2) sorgt, und gegebenenfalls eine Maschine oberhalb dieses Förderers angeordnet ist, wobei jede Maschine (3, 4, 5) mit mindestens einem Zerstäuber (8) ausgerüstet ist und das Verfahren für eine solche Anlage die automatische Erzeugung der "Auftrag-Datei" sicherstellt.
